# EUROPEAN PATENT APPLICATION

(11) **EP 4 827 205 A1**
(43) Date of publication of application: **21.10.2026**
(21) Application number: 24902787.1
(22) Date of filing: 10.12.2024
(51) Int. Cl.: H04W 72/12

(54) **COMMUNICATION METHOD AND APPARATUS**

(30) Priority: 12.12.2023 CN 202311705396
(71) Applicant: Huawei Technologies Co., Ltd., Shenzhen, Guangdong 518129 (CN)
(72) Inventor: HUANG, Guogang, Shenzhen, Guangdong 518129 (CN); LI, Yunbo, Shenzhen, Guangdong 518129 (CN); GUO, Yuchen, Shenzhen, Guangdong 518129 (CN); GAN, Ming, Shenzhen, Guangdong 518129 (CN)
(74) Representative: Huawei European IPR
(86) International application number: PCT/CN2024/138011
(87) International publication number: WO 2025/124366

(57) **Abstract**

This application relates to a communication method and apparatus. In the method, a first device may schedule a service flow between a second device and a third device based on an SCS request frame from the second device, so that the first device does not need to receive the SCS request frame from the second device and the third device a plurality of times, to separately schedule transmission of the service flow on the second device and transmission of the service flow on the third device based on a plurality of SCS request frames. In this way, signaling overheads can be reduced. In addition, end-to-end QoS is ensured, and user experience is improved.

## Description

This application claims priority to Chinese Patent Application No. 202311705396.5, filed with the China National Intellectual Property Administration on December 12, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To respond to a user requirement for quality of service (quality of service, QoS), a stream classification service (stream classification service, SCS) mechanism is currently proposed. To be specific, a station (station, STA) may negotiate, by using the SCS mechanism, a QoS parameter, for example, a QoS parameter used to schedule uplink transmission, a QoS parameter used to schedule downlink transmission, and/or the like, of an SCS flow with an associated (access point, AP) of the station.

Generally, to ensure end-to-end QoS, STAs that are at two ends of a service flow and that are associated with a same AP need to separately negotiate a QoS parameter of an SCS flow with the AP. This results in high signaling overheads.

### SUMMARY

This application provides a communication method and apparatus, to reduce signaling overheads.

According to a first aspect, a communication method is provided. The method may be performed by a first device, may be performed by a module (for example, a processor, a chip, or a chip system) used in the first device, or may be implemented by a logical node, a logical module, or software that can implement all or some functions of the first device. In the communication method, an SCS request frame from a second device may be received. The SCS request frame includes a QoS parameter of a service flow, and the SCS request frame further includes identification information of the second device and identification information of a third device. Therefore, the service flow between the second device and the third device may be scheduled based on the SCS request frame.

It can be learned that in the foregoing embodiment, the first device may schedule the service flow between the second device and the third device based on the SCS request frame from the second device, so that the first device does not need to receive the SCS request frame from the second device and the third device a plurality of times, to separately schedule transmission of the service flow on the second device and transmission of the service flow on the third device based on a plurality of SCS request frames. For example, the first device first receives an SCS request frame (the SCS request frame is used to schedule uplink transmission of the service flow on the second device) from the second device, and then receives another SCS request frame (the SCS request frame is used to schedule downlink transmission of the service flow on the third device) from the third device. Then, the first device receives an SCS request frame (the SCS request frame is used to schedule downlink transmission of the service flow on the second device) from the second device, and finally receives another SCS request frame (the SCS request frame is used to schedule uplink transmission of the service flow on the third device) from the third device. In this way, signaling overheads can be reduced. In addition, end-to-end QoS is ensured, and user experience is improved.

With reference to the first aspect, in a possible implementation, the SCS request frame further includes indication information, and the scheduling the service flow between the second device and the third device based on the SCS request frame includes: scheduling the service flow between the second device and the third device based on the indication information and the QoS parameter of the service flow.

It can be learned that in the foregoing embodiment, the indication information is carried in the SCS request frame, so that the first device can be explicitly indicated to schedule the service flow between the second device and the third device based on the QoS parameter of the service flow, and flexibility is higher.

With reference to the first aspect, in a possible implementation, the scheduling the service flow between the second device and the third device based on the SCS request frame includes: when the QoS parameter of the service flow includes an uplink QoS parameter of the service flow, scheduling, based on the SCS request frame, uplink transmission of the service flow on the second device and downlink transmission of the service flow on the third device; and/or when the QoS parameter of the service flow includes a downlink QoS parameter of the service flow, scheduling, based on the SCS request frame, downlink transmission of the service flow on the second device and uplink transmission of the service flow on the third device.

It can be learned that in the foregoing embodiment, the first device does not need to receive the SCS request frame from the second device and the third device a plurality of times, to separately schedule uplink transmission of the service flow on the second device and downlink transmission of the service flow on the third device based on a plurality of SCS request frames, thereby reducing signaling overheads. Similarly, the first device does not need to receive the SCS request frame from the second device and the third device a plurality of times, to separately schedule downlink transmission of the service flow on the second device and uplink transmission of the service flow on the third device based on a plurality of SCS request frames, thereby reducing signaling overheads. In addition, end-to-end QoS can be ensured, and user experience can be improved.

With reference to the first aspect, in a possible implementation, the method further includes: determining, based on the identification information of the second device and the identification information of the third device, that both the second device and the third device are associated with the first device.

It can be learned that in the foregoing embodiment, the first device may learn, by using the identification information of the second device and the identification information of the third device, that both the second device and the third device are associated with the first device, so that the first device may learn, in an implicit indication manner, that the first device can schedule the service flow between the second device and the third device based on the QoS parameter of the service flow, thereby reducing signaling overheads. In addition, the first device may further identify the service flow by using the identification information of the second device and the identification information of the third device.

With reference to the first aspect, in a possible implementation, the first device is an access point multi-link device, the second device is a non-access point multi-link device, and the third device is a non-access point multi-link device or a device that does not support QoS parameter reporting.

It can be learned that in the foregoing embodiment, when the first device is an access point multi-link device, the second device is a non-access point multi-link device, and the third device is a non-access point multi-link device, the first device may still schedule the service flow between the second device and the third device based on the SCS request frame from the second device, thereby reducing signaling overheads. When the first device is an access point multi-link device, the second device is a non-access point multi-link device, and the third device is a device that does not support QoS parameter reporting, the first device may still schedule the service flow between the second device and the third device based on the SCS request frame from the second device when one end (for example, the third device) of the service flow does not support QoS parameter reporting, thereby ensuring end-to-end QoS and improving user experience.

With reference to the first aspect, in a possible implementation, the identification information of the second device is a medium access control MAC address of the second device, and the identification information of the third device is a MAC address of the third device. Source address information of the service flow is the identification information of the second device, and destination address information of the service flow is the identification information of the third device; or source address information of the service flow is the identification information of the third device, and destination address information of the service flow is the identification information of the second device.

With reference to the first aspect, in a possible implementation, the indication information is carried in a QoS characteristics element of the SCS request frame.

With reference to the first aspect, in a possible implementation, the identification information of the second device and the identification information of the third device are carried in a traffic classification element of the SCS request frame.

It can be learned that in the foregoing embodiment, the identification information of the second device and the identification information of the third device may be carried in the traffic classification element of the SCS request frame, to help the first device ensure that a service is mapped to a corresponding traffic identifier (traffic identifier, TID), thereby ensuring consistency of QoS management policies of all stations within a range of a basic service set (basic service set, BSS), and better managing and scheduling service transmission of the entire BSS.

With reference to the first aspect, in a possible implementation, the QoS parameter of the service flow includes a minimum service interval and/or a maximum service interval.

With reference to the first aspect, in a possible implementation, the method further includes: sending an SCS response frame to the second device, where the SCS response frame indicates that the service flow is accepted.

According to a second aspect, a communication method is provided. The method may be performed by a second device, may be performed by a module (for example, a processor, a chip, or a chip system) used in the second device, or may be implemented by a logical node, a logical module, or software that can implement all or some functions of the second device. In the communication method, an SCS request frame is generated. The SCS request frame includes a QoS parameter of a service flow, and the SCS request frame further includes identification information of the second device and identification information of a third device. Therefore, the SCS request frame may be sent to a first device, and the SCS request frame is used by the first device to schedule the service flow between the second device and the third device.

It can be learned that in the foregoing embodiment, the second device may send the SCS request frame to the first device, so that the first device may schedule the service flow between the second device and the third device based on the SCS request frame from the second device, and the first device does not need to receive the SCS request frame from the second device and the third device a plurality of times, to separately schedule transmission of the service flow on the second device and transmission of the service flow on the third device based on a plurality of SCS request frames. For example, the first device first receives an SCS request frame (the SCS request frame is used to schedule uplink transmission of the service flow on the second device) from the second device, and then receives another SCS request frame (the SCS request frame is used to schedule downlink transmission of the service flow on the third device) from the third device. Then, the first device receives an SCS request frame (the SCS request frame is used to schedule uplink transmission of the service flow on the second device) from the second device, and finally receives another SCS request frame (the SCS request frame is used to schedule downlink transmission of the service flow on the third device) from the third device. In this way, signaling overheads can be reduced. In addition, end-to-end QoS is ensured, and user experience is improved.

With reference to the second aspect, in a possible implementation, the SCS request frame further includes indication information, and the indication information and the QoS parameter of the service flow are used by the first device to schedule the service flow between the second device and the third device.

It can be learned that in the foregoing embodiment, the indication information is carried in the SCS request frame, so that the first device can be explicitly indicated to schedule the service flow between the second device and the third device based on the QoS parameter of the service flow, and flexibility is higher.

With reference to the second aspect, in a possible implementation, the QoS parameter of the service flow includes an uplink QoS parameter of the service flow, and the QoS parameter of the service flow is used by the first device to schedule uplink transmission of the service flow on the second device and downlink transmission of the service flow on the third device; and/or the QoS parameter of the service flow includes a downlink QoS parameter of the service flow, and the QoS parameter of the service flow is used by the first device to schedule downlink transmission of the service flow on the second device and uplink transmission of the service flow on the third device.

It can be learned that in the foregoing embodiment, the second device does not need to send the SCS request frame to the first device a plurality of times, so that the first device separately schedules uplink transmission and downlink transmission of the service flow on the second device based on a plurality of SCS request frames, thereby reducing signaling overheads. Similarly, the third device does not need to send the SCS request frame to the first device a plurality of times, so that the first device separately schedules downlink transmission of the service flow on the third device and uplink transmission of the service flow on the third device based on a plurality of SCS request frames, thereby reducing signaling overheads. In addition, end-to-end QoS can be ensured, and user experience can be improved.

With reference to the second aspect, in a possible implementation, the first device is an access point multi-link device, the second device is a non-access point multi-link device, and the third device is a non-access point multi-link device or a device that does not support QoS parameter reporting.

It can be learned that in the foregoing embodiment, when the first device is an access point multi-link device, the second device is a non-access point multi-link device, and the third device is a non-access point multi-link device, the SCS request frame may still be used to schedule the service flow between the second device and the third device, thereby reducing signaling overheads. When the first device is an access point multi-link device, the second device is a non-access point multi-link device, and the third device is a device that does not support QoS parameter reporting, the SCS request frame may still be used to schedule the service flow between the second device and the third device when one end (for example, the third device) of the service flow does not support QoS parameter reporting, thereby ensuring end-to-end QoS and improving user experience.

With reference to the second aspect, in a possible implementation, the identification information of the second device is a medium access control MAC address of the second device, and the identification information of the third device is a MAC address of the third device. Source address information of the service flow is the identification information of the second device, and destination address information of the service flow is the identification information of the third device; or source address information of the service flow is the identification information of the third device, and destination address information of the service flow is the identification information of the second device.

With reference to the second aspect, in a possible implementation, the indication information is carried in a QoS characteristics element of the SCS request frame.

With reference to the second aspect, in a possible implementation, the identification information of the second device and the identification information of the third device are carried in a traffic classification element of the SCS request frame.

It can be learned that in the foregoing embodiment, the identification information of the second device and the identification information of the third device may be carried in the traffic classification element of the SCS request frame, to help the first device ensure that a service is mapped to a corresponding TID, thereby ensuring consistency of QoS management policies of all stations within a range of a BSS, and better managing and scheduling service transmission of the entire BSS.

With reference to the second aspect, in a possible implementation, the QoS parameter of the service flow includes a minimum service interval and/or a maximum service interval.

With reference to the second aspect, in a possible implementation, the method further includes: receiving an SCS response frame from the first device, where the SCS response frame indicates that the service flow is accepted.

According to a third aspect, a communication apparatus is provided, including a unit or a module configured to implement the method according to any one of the implementations of the first aspect and the second aspect. The communication apparatus may be a first device or a second device, may be a module (for example, a processor, a chip, or a chip system) of the first device or the second device, or may be a logical node, a logical module, or software that can implement all or some functions of the first device or the second device.

According to a fourth aspect, a communication apparatus is provided. The communication apparatus includes at least one processor. The at least one processor is configured to perform the method according to any one of the implementations of the first aspect and the second aspect. The communication apparatus may be a first device or a second device, may be a module (for example, a processor, a chip, or a chip system) of the first device or the second device, or may be a logical node, a logical module, or software that can implement all or some functions of the first device or the second device. The at least one processor may execute a computer program or instructions in a memory, so that the foregoing method is performed. The memory may be included in the communication apparatus, or may be located outside the communication apparatus. In addition, the communication apparatus may further include an interface.

According to a fifth aspect, a communication system is provided. The communication system includes a first device and a second device. The first device is configured to perform the method in any one of the implementations of the first aspect. The second device is configured to perform the method in any one of the implementations of the second aspect.

According to a sixth aspect, a computer-readable storage medium is provided. The computer-readable storage medium stores computer instructions. When the computer instructions are executed, a computer is enabled to perform the method according to any one of the implementations of the first aspect or the second aspect.

According to a seventh aspect, a computer program product is provided. The computer program product includes computer program code. When the computer program code is run by a computer, the computer is enabled to perform the method according to any one of the implementations of the first aspect or the second aspect.

### BRIEF DESCRIPTION OF DRAWINGS

FIG. 1 is a diagram of a connection between an AP MLD and a non-AP MLD according to an embodiment of this application;
FIG. 2 shows a frame format of an SCS request frame;
FIG. 3 shows a format of an SCS descriptor;
FIG. 4 shows a format of an intra-access category priority element;
FIG. 5 shows a format of a traffic classification element;
FIG. 6 shows a format of a frame classifier type field;
FIG. 7 shows a format of another frame classifier type field;
FIG. 8 shows a format of still another frame classifier type field;
FIG. 9 shows a format of a QoS characteristics element;
FIG. 10 shows a format of a control information field;
FIG. 11 shows a format of an SCS response frame;
FIG. 12 is a diagram of an architecture of a communication system according to an embodiment of this application;
FIG. 13 is a schematic flowchart of a communication method according to an embodiment of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the words such as "first" and "second" are used in embodiments of this application to distinguish between same items or similar items that have basically same network elements or purposes. A person skilled in the art may understand that the words such as "first" and "second" do not limit a quantity or an execution sequence, and the words such as "first" and "second" do not necessarily indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

To facilitate understanding of content of the solutions, the following further explains and describes some terms in embodiments of this application, so as to facilitate understanding by a person skilled in the art. This part is merely for ease of understanding, and cannot be considered as a specific limitation on this application.

### 1. STA

The STA in embodiments of this application may be a STA applicable to an 802.11 standard, for example, 802.11a/b/g, 802.11n, 802.11ac, or 802.11ax, or a standard of the next generation, for example, 802.11be, or even later generations. 802.11n may also be referred to as high throughput (high throughput, HT). 802.11ac may also be referred to as very high throughput (very high throughput, VHT). 802.11ax may also be referred to as high efficiency (high efficiency, HE) or Wi-Fi 6. 802.11be may also be referred to as extremely high throughput (extremely high throughput, EHT) or Wi-Fi 7. Standards such as 802.11a/b/g before HT may be collectively referred to as non-high throughput (non-HT).

The STA in embodiments of this application may be a terminal product that supports medium access control (medium access control, MAC) and a physical layer (physical, PHY) of the 802.11 standard, for example, may be various user terminals, user apparatuses, access apparatuses, subscriber stations, subscriber units, mobile stations, user agents, user devices, or other names that have a wireless communication function. The user terminal may include various handheld devices, vehicle-mounted devices, wearable devices, or computing devices that have the wireless communication function, or other processing devices connected to a wireless modem, and various forms of user equipment (user equipment, UE), mobile stations (mobile station, MS), terminals (terminal), terminal devices (terminal equipment), portable communication devices, handheld devices, portable computing devices, entertainment devices, game devices or systems, global positioning system devices, any other suitable device configured to perform network communication via a wireless medium, or the like. For example, the STA may be a router, a switch, a bridge, or the like. Herein, for ease of description, the devices mentioned above are collectively referred to as stations or STAs.

In embodiments of this application, a form of the STA is not limited. An apparatus configured to implement a function of the STA may be the STA, or may be an apparatus that can support the STA in implementing the function, for example, a chip system. The apparatus may be installed in the STA or used in conjunction with the STA. In embodiments of this application, the chip system may include a chip, or may include a chip and another discrete component.

In addition, the STA may further correspond to a MAC address (address).

### 2. AP

The AP in embodiments of this application may be an AP applicable to the 802.11 standard, or may be an apparatus that is deployed in a wireless communication network and that provides a wireless communication function for a STA associated with the AP. The AP may be used as a hub of a communication system, and is usually a network side product that supports MAC and PHY of the 802.11 standard, for example, may be a communication device such as a base station, a router, a gateway, a repeater, a communication server, a switch, or a bridge. The base station may include macro base stations, micro base stations, relay stations, and the like in various forms. Herein, for ease of description, the devices mentioned above are collectively referred to as APs.

In embodiments of this application, a form of the AP is not limited. An apparatus configured to implement a function of the AP may be the AP, or may be an apparatus that can support the AP in implementing the function, for example, a chip system. The apparatus may be installed in the AP or used in conjunction with the AP.

In addition, the AP may further correspond to a MAC address.

### 3. Multi-link device (multi-link device, MLD)

In this application, an 802.11 standard station device that simultaneously supports communication of a plurality of links is referred to as an MLD. The multi-link device includes one or more affiliated stations (affiliated STA). The affiliated station is a logical station and may operate on a link, a frequency band, or a channel. The affiliated station may be an AP or a STA. If all stations inside an MLD are APs, the MLD is further referred to as an AP multi-link device (AP multi-link device, AP MLD). If all stations inside an MLD are STAs, the MLD is further referred to as a non-AP multi-link device (non-AP multi-link device, non-AP MLD).

The MLD is an apparatus having a wireless communication function. The apparatus may be an entire device, or may be a chip, a processing system, or the like installed in the entire device. The device on which the chip or the processing system is installed may be controlled by the chip or the processing system, to implement the method and functions in embodiments of this application. The MLD may implement wireless communication in compliance with 802.11 series protocols, for example, may be a station that complies with extremely high throughput (extremely high throughput, EHT), a station that complies with 802.11be or is compatible with and supports 802.11be, or a station that complies with a next generation protocol based on 802.11be, to implement communication with another device. Certainly, the another device may be a multi-link device, or may not be a multi-link device.

For example, the non-AP MLD has a wireless transceiver function, may support 802.11 series protocols, and may communicate with an AP MLD, a single-link device, or another non-AP MLD. For example, the non-AP MLD is any user communication device that allows a user to communicate with an AP and communicate with a wireless local area network (wireless local area network, WLAN). For example, the non-AP MLD may be user equipment that can be connected to the Internet, such as a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a mobile phone, or the like, or an internet of things node in an internet of things, or a vehicle-mounted communication apparatus in an internet of vehicles. The non-AP MLD may alternatively be a chip and a processing system in the foregoing terminals.

For example, the AP MLD may be an apparatus that provides a service for the non-AP MLD, and may support 802.11 series protocols. For example, the AP MLD may be a communication entity, for example, a communication server, a router, a switch, or a bridge, or the AP MLD may include a macro base station, a micro base station, a relay station, and the like in various forms. Certainly, the AP MLD may alternatively be a chip and a processing system in the devices in the various forms. In this way, the method and functions in embodiments of this application are implemented. An 802.11 protocol may be a protocol that supports 802.11be or is compatible with 802.11be.

In addition, the MLD may support high-rate and low-delay transmission. With continuous evolution of application scenarios of wireless local area networks, the MLD may be further applied to more scenarios, for example, a sensor node (for example, a smart meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, an AR device, a VR device, or another wearable device), a smart device (for example, a printer or a projector) in a smart office, an internet of vehicles device in an internet of vehicles, and some infrastructures (for example, a vending machine, a self-service navigation kiosk of a shopping mall or supermarket, a self-service cash register device, or a self-service ordering machine) in daily life scenarios. Specific forms of the non-AP MLD and the AP MLD are not limited in embodiments of this application. The foregoing devices are merely examples for description herein.

In a possible implementation, one MLD may include a plurality of logical stations, and each logical station operates on one link, but a plurality of logical stations are allowed to operate on a same link. A frequency band on which the MLD operates may include one or more frequency bands of sub 1 GHz, 2.4 GHz, 5 GHz, 6 GHz, a high frequency 60 GHz, and the like. In addition, the MLD may be a single-antenna device, or may be a multi-antenna device. For example, the MLD may be a device with more than two antennas. A quantity of antennas included in the MLD is not limited in embodiments of this application.

Generally, before the AP MLD and the non-AP MLD perform multi-link communication, the non-AP MLD may simultaneously establish an association with a plurality of links of the AP MLD by performing a multi-link establishment operation on one link (link). A link that performs association request/response (association request/response) frame exchange is referred to as a transmitted link (transmitted link), and correspondingly, other links are referred to as non-transmitted links (non-transmitted link). An association request frame and an association response frame may carry information about a plurality of links by using a multi-link element (multi-link element), to implement simultaneous association of the plurality of links.

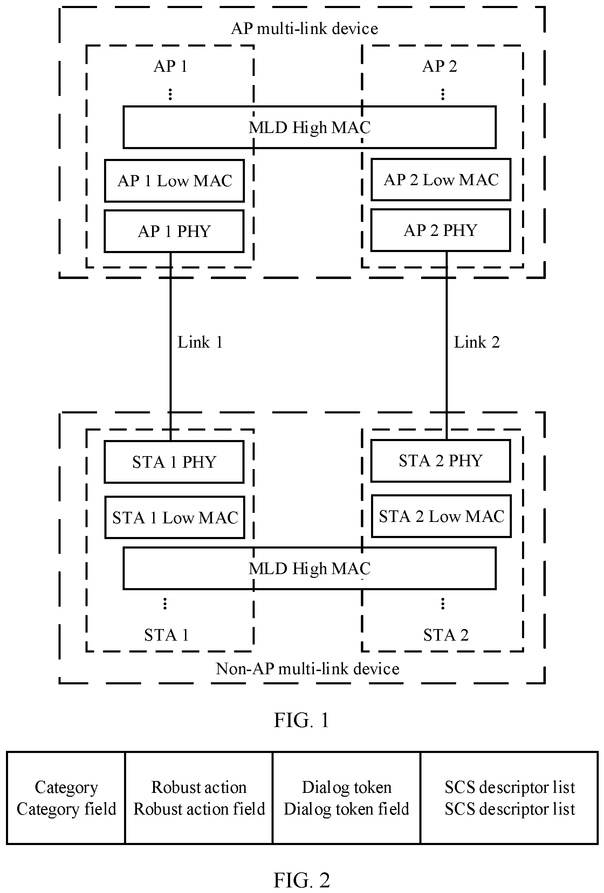

For example, FIG. 1 is a diagram of a connection between an AP MLD and a non-AP MLD according to an embodiment of this application. As shown in FIG. 1, both the non-AP MLD and the AP MLD use a structure in which a high MAC layer is shared. A plurality of STAs (such as a STA 1 and a STA 2) in the non-AP MLD are respectively independent of each other at a low MAC (low MAC) layer and a PHY layer, and a plurality of APs (such as an AP 1 and an AP 2) in the AP MLD are respectively independent of each other at a low MAC layer and a PHY layer. In a possible implementation, the high MAC layer mainly completes operations such as allocation of a sequence number (sequence number, SN) and a packet number (packet number, PN) of an MSDU, encryption, and decryption. The low MAC layer mainly completes operations such as MPDU assembly, channel access, packet sending, and reception acknowledgment of respective links.

With reference to FIG. 1, a procedure of multi-link establishment is as follows: The non-AP MLD sends, on the link 1, an association request frame carrying a multi-link element (multi-link element). The link 1 is a transmitted link, and the link 2 is a non-transmitted link. After receiving the association request frame, the AP MLD replies, to the non-AP MLD on the link 1, an association response frame carrying the multi-link element. The AP MLD may separately indicate, in the association response (association response) frame, whether each link requested to be established is successful. The association of the non-AP MLD and the AP MLD is successful only when the transmitted link is accepted. For example, as shown in FIG. 1, the transmitted link 1 is accepted, the non-AP MLD is successfully associated with the AP MLD, and the link 2 is successfully established simultaneously. In other words, the AP 1 and the STA 1 are connected via the link 1, and the AP 2 and the STA 2 are connected via the link 2.

Generally, the MLD corresponds to a MAC address, and each link of the MLD corresponds to a respective link address. The AP MLD is used as an example. An MLD address may be an MLD MAC address (address) of the AP MLD. The non-AP MLD is used as an example. An MLD address may be an MLD MAC address of the non-AP MLD. A link address between the AP MLD and the non-AP MLD may include an affiliated AP MAC address (affiliated AP MAC address) and an affiliated STA MAC address (affiliated STA MAC address) that correspond to two ends of a link. As shown in FIG. 1, a link address of the link 1 between the AP MLD and the non-AP MLD may include a MAC address of the AP 1 and a MAC address of the STA 1, and a link address of the link 2 may include a MAC address of the AP 2 and a MAC address of the STA 2.

In a possible implementation, the MLD address may belong to a high MAC sublayer, and the link address may belong to a low MAC sublayer.

### 4. SCS mechanism

Low delay is an important feature of 802.11be. A STA may report a low-delay service flow to an AP by using the SCS mechanism. The service flow may also be referred to as an SCS flow. In this application, the service flow and the SCS flow may be interchangeably used. Specifically, the STA may send an SCS request frame (SCS request frame) to an associated AP, to report a low-delay service flow and indicate a QoS parameter of the service flow. After receiving the SCS request frame, the AP replies with an SCS response frame (SCS response frame). The SCS response frame may be used to notify the STA whether the AP accepts the low-delay service flow reported by the STA. The following separately describes frame structures of the SCS request frame and the SCS response frame.

For a frame format of the SCS request frame, refer to FIG. 2. As shown in FIG. 2, the SCS request frame includes a category (category) field, a robust action (robust action) field, a dialog token (dialog token) field, and an SCS descriptor list (SCS descriptor list). The category field indicates a category to which an action frame (for example, the SCS request frame) belongs, the robust action field indicates a frame in the category, the dialog token field is used to match a corresponding SCS request frame and SCS response frame, and the SCS descriptor list includes one or more SCS descriptors.

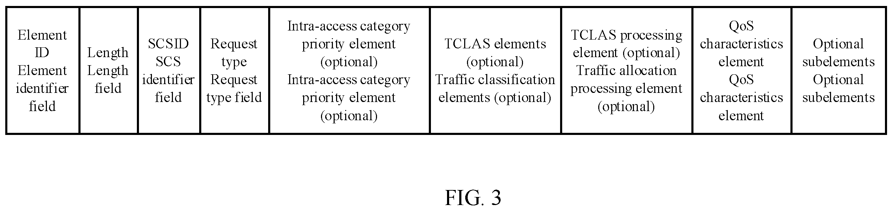

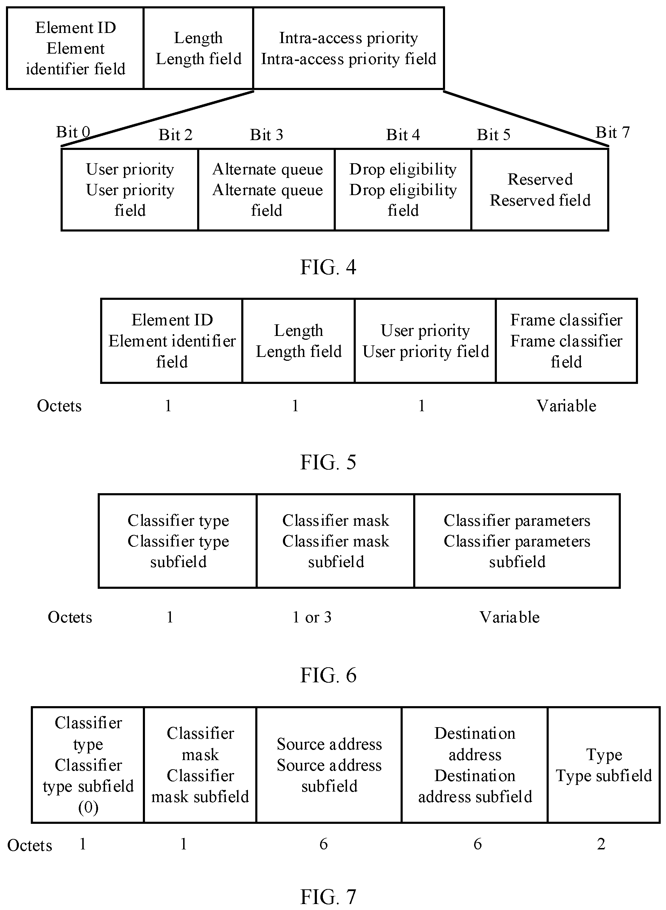

For a format of the SCS descriptor, refer to FIG. 3. As shown in FIG. 3, the SCS descriptor includes an element identifier (element ID) field, a length (length) field, an SCS identifier (SCS ID) field, a request type (request type) field, an intra-access category priority element (intra-access category priority element) (optional), a traffic classification element (TCLAS element) (optional), a traffic allocation processing element (TCLAS Processing element) (optional), a QoS characteristics element (QoS characteristics element), and optional subelements (optional subelements). Details are as follows:
1. A 1-octet element identifier field is used to identify the SCS descriptor element.
2. A 1-octet length field indicates a length of the SCS descriptor element.
3. A 1-octet SCS identifier field indicates an identifier allocated to a service flow.
4. A 1-octet request type field indicates a type of a request. For example, if the request type field is set to 0, it indicates adding (ADD), for example, adding or requesting to create a service flow; if the request type field is set to 1, it indicates removing (remove), for example, requesting to remove a service flow; and if the request type field is set to 2, it indicates changing (change), for example, requesting to modify a service flow.
5. For a format of the intra-access category priority element, refer to FIG. 4. As shown in FIG. 4, the intra-access category priority element includes an element identifier (element ID) field, a length (length) field, and an intra-access priority (intra-access priority) field. A 1-octet element identifier field is used to identify the intra-access category priority element. A 1-octet length field indicates a length of the intra-access category priority element. A 1-octet intra-access priority field includes a user priority (user priority) field, an alternate queue (alternate queue) field, a drop eligibility (drop eligibility) field, and a reserved (reserved) field. A 3-bit user priority field indicates a user priority. A 1-bit alternate queue field indicates whether to create a new alternate queue for the service flow. A 1-bit drop eligibility field indicates whether a data packet of the service flow can be dropped when resources are insufficient. In FIG. 4, bit 0 to bit 2 are the user priority field, bit 3 is the alternate queue field, bit 4 is the drop eligibility field, and bit 5 to bit 7 are the reserved (reserved) field.
6. The traffic classification element indicates how to identify the service flow, and the traffic classification element carries a criterion for determining the service flow. The SCS descriptor may carry one or more traffic classification elements.

For a format of the traffic classification element, refer to FIG. 5. As shown in FIG. 5, the traffic classification element includes an element identifier (element ID) field, a length (length) field, a user priority (user priority) field, and a frame classifier type (frame classifier) field. Details are as follows:
(1) A 1-octet element identifier field is used to identify the traffic classification element.
(2) A 1-octet length field indicates a length of the traffic classification element.
(3) A 1-octet user priority field indicates a user priority. When a plurality of elements include the user priority field, the traffic classification element is usually used. A value of the user priority field may be 0 to 11. For example, in Table 1, if a value of the user priority field is 0 to 7, it indicates a priority of an MSDU (the user priority value of an MDSU). If the value of the user priority field is 8, it indicates that an access category (access category, AC) of an MSDU is AC_VO (the AC value of an MDSU is AC_VO). If the value of the user priority field is 9, it indicates that an access category of an MSDU is AC_VI (the AC value of an MDSU is AC_VI). If the value of the user priority field is 10, it indicates that an access category of an MSDU is AC_BE (the AC value of an MDSU is AC_BE). If the value of the user priority field is 11, it indicates that an access category of an MSDU is AC_BK (the AC value of an MDSU is AC_BK). AC_VO indicates that the access category is a voice (voice) flow, AC_VI indicates that the access category is a video (video) flow, AC_BE indicates that the access category is a best effort (best effort) flow, and AC_BK indicates that the access category is a background (background) flow.

**Table 1 User priority field in the traffic classification element**

| Values of the user priority (user priority) field | Meaning (meaning) |
|---|---|
| 0 to 7 | Priority of an MSDU (the user priority value of an MDSU) |
| 8 | The access category of an MSDU is AC_VO (the AC value of an MDSU is AC_VO) |
| 9 | The access category of an MSDU is AC_VI (the AC value of an MDSU is AC_VI) |
| 10 | The access category of an MSDU is AC_BE (the AC value of an MDSU is AC_BE) |
| 11 | The access category of an MSDU is AC_BK (the AC value of an MDSU is AC_BK) |

(4) An octet length of the frame classifier type field is variable (variable). For a format of the frame classifier type field, refer to FIG. 6. As shown in FIG. 6, the frame classifier type field includes a classifier type (classifier type) subfield, a classifier mask (classifier mask) subfield, and a classifier parameters (classifier parameters) subfield. Details are as follows:
1) A value of a 1-octet classifier type subfield may be 0 to 255, and different values make content indicated by the classifier parameters (classifier parameters) subfield different. For example, in Table 2, if the value of the classifier type subfield is 0, it indicates ethernet parameters (ethernet parameters). If the value of the classifier type subfield is 1, it indicates transmission control protocol (transmission control protocol, TCP) /user datagram protocol (user datagram protocol, UDP) internet protocol (internet protocol, IP) parameters (TCP/UDP IP parameters). If the value of the classifier type subfield is 2, it indicates institute of electrical and electronics engineers (IEEE, institute of electrical and electronics engineers) 802.1Q-2003 parameters (IEEE802.1Q-2003 parameters) (deprecated (deprecated)). If the value of the classifier type subfield is 3, it indicates filter offset parameters (filter offset parameters). If the value of the classifier type subfield is 4, it indicates IP and higher layer parameters (IP and higher layer parameters). If the value of the classifier type subfield is 5, it indicates IEEE802.1Q parameters (IEEE802.1Q parameters). If the value of the classifier type subfield is 6, it indicates IEEE802.11 MAC header parameters (IEEE802.11 MAC header parameters). If the value of the classifier type subfield is 7, it indicates IEEE standard 802.11 downlink PV1 medium access control protocol data unit (MAC protocol data unit, MPDU) MAC header parameters (IEEE Std 802.11 downlink PV1 MPDU MAC header parameters). For example, if a value of a from distributed system (from distributed system, From DS) field of the frame control field is 1 (from DS field of the frame control field equal to 1), it indicates IEEE standard 802.11 downlink PV1 MPDU MAC header parameters. If the value of the classifier type subfield is 8, it indicates IEEE standard 802.11 nondownlink PV1 MPDU MAC header parameters (IEEE Std 802.11 nondownlink PV1 MPDU MAC header parameters). For example, if the value of the from distributed system field of the frame control field is 0 (from DS field of the frame control field equal to 0), it indicates IEEE standard 802.11 nondownlink PV1 MPDU MAC header parameters. If the value of the classifier type subfield is 9, it indicates IEEE standard 802.11 PV1 MDSU full address MAC header parameters (IEEE Std 802.11 PV1 MDSU full address MAC header parameters). If the value of the classifier type subfield is 10, it indicates IP extensions and higher layer parameters (IP extensions and higher layer parameters). 11 to 255 are reserved (reserved).

**Table 2 Frame classifier type (frame classifier type) field**

| Values of the classifier type (classifier type) subfield | Classifier parameters (classifier parameters) |
|---|---|
| 0 | Ethernet parameters (ethernet parameters) |
| 1 | Transmission control protocol (transmission control protocol, TCP) / User datagram protocol (user datagram protocol, UDP) internet protocol (internet protocol, IP) parameters (TCP/UDP IP parameters) |
| 2 | Institute of electrical and electronics engineers (IEEE, institute of electrical and electronics engineers) 802.1Q-2003 parameters (IEEE802.1Q-2003 parameters) (deprecated (deprecated)) |
| 3 | Filter offset parameters (filter offset parameters) |
| 4 | IP and higher layer parameters (IP and higher layer parameters) |
| 5 | IEEE802.1Q parameters (IEEE802.1Q parameters) |
| 6 | IEEE802.11 MAC header parameters (IEEE802.11 MAC header parameters) |
| 7 | IEEE standard 802.11 downlink PV1 medium access control protocol data unit (MAC protocol data unit, MPDU) MAC header parameters (IEEE Std 802.11 downlink PV1 MPDU MAC header parameters). For example, if a value of a from distributed system (from distributed system, From DS) field of the frame control field is 1 (from DS field of the frame control field equal to 1), it indicates IEEE standard 802.11 downlink PV1 MPDU MAC header parameters. |
| 8 | IEEE standard 802.11 nondownlink PV1 MPDU MAC header parameters (IEEE Std 802.11 nondownlink PV1 MPDU MAC header parameters). For example, if the value of the from distributed system field of the frame control field is 0 (from DS field of the frame control field equal to 0), it indicates IEEE standard 802.11 nondownlink PV1 MPDU MAC header parameters. |
| 9 | IEEE standard 802.11 PV1 MDSU full address MAC header parameters (IEEE Std 802.11 PV1 MDSU full address MAC header parameters) |
| 10 | IP extensions and higher layer parameters (IP extensions and higher layer parameters) |
| 11 to 255 | Reserved (reserved) |

2) A 1-octet or 3-octet classifier mask subfield includes a string of classifier mask control subfields having a length of 2 bits. A first bit (that is, a leftmost bit or a least significant bit (least significant bit, LSB)) indicates whether a corresponding field is used for comparison and matching, and a second bit (that is, a rightmost bit or a most significant bit (most significant bit, MSB)) indicates whether a corresponding match specification appears.
3) An octet length of the classifier parameter subfield is variable (variable). The following describes in detail the classifier parameter subfield when the value of the classifier type subfield is 6. Specifically, content of octet indexes 0 to 2 in the classifier mask subfield is shown in Table 3. For ease of understanding, an example in which an octet index in the classifier mask subfield is 0 is used for description. It is assumed that an octet whose octet index is 0 is referred to as a first octet. When a bit index in the first octet is B1B0, it indicates frame control; when a bit index in the first octet is B3B2, it indicates duration or an identifier; when a bit index in the first octet is B5B4, it indicates an address 1; and when a bit index in the first octet is B7B6, it indicates an address 2.

**Table 3 Classifier mask subfield obtained when the value of the classifier type subfield is 6 (classifier mask for classifier type 6)**

| Octet index (octet index) | Bit index (bits index) | Classifier parameters (classifier parameters) subfield |
|---|---|---|
| 0 | B1B0 | Frame control (frame control) |
| | B3B2 | Duration or an identifier (duration/ID) |
| | B5B4 | Address 1 (address1) |
| | B7B6 | Address 2 (address2) |
| 1 | B1B0 | Address 3 (address3) |
| | B3B2 | Sequence control (sequence control) |
| | B5B4 | Address 4 (address4) |
| | B7B6 | QoS control (QoS control) |
| 2 | B1B0 | High throughput control (HT control) |
| | B3B2 | Reserved (reserved) |
| | B5B4 | Reserved (reserved) |
| | B7B6 | Reserved (reserved) |

In a possible implementation, when the value of the classifier type subfield is 0 or 6, a format of the frame classifier type field may be different from that in FIG. 6. Details are as follows:

In a first manner, when the value of the classifier type subfield is 0, for a format of the frame classifier type field, refer to FIG. 7. As shown in FIG. 7, the frame classifier type field includes a 1-octet classifier type (classifier type) subfield (the value of the classifier type subfield is 0), a 1-octet classifier mask (classifier mask) subfield, a 6-octet source address (source address) subfield, a 6-octet destination address (destination address) subfield, and a 2-octet type (type) subfield.

The source address subfield indicates a source address of the service flow. The destination address subfield indicates a destination address of the service flow, and the type subfield indicates a type of a carried upper layer protocol.

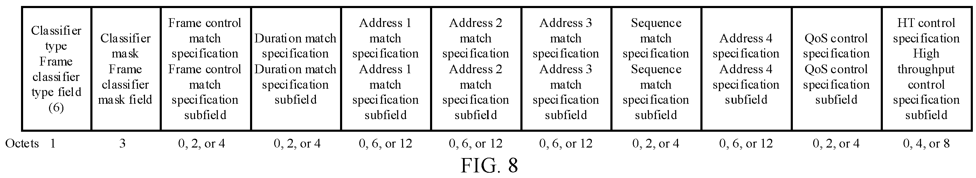

In a second manner, when the value of the classifier type subfield is 6, for a format of the frame classifier type field, refer to FIG. 8. As shown in FIG. 8, the frame classifier type field includes a 1-octet classifier type (classifier type) subfield (the value of the classifier type subfield is 6), a 3-octet classifier mask (classifier mask) subfield, a 0-octet, 2-octet, or 4-octet frame control match specification (frame control match specification) subfield, a 0-octet, 2-octet, or 4-octet duration match specification (duration match specification) subfield, a 0-octet, 6-octet, or 12-octet address 1 match specification (address1 match specification) subfield, a 0-octet, 6-octet, or 12-octet address 2 match specification (address2 match specification) subfield, a 0-octet, 6-octet, or 12-octet address 3 match specification (address3 match specification) subfield, a 0-octet, 2-octet, or 4-octet sequence match specification (sequence match specification) subfield, a 0-octet, 6-octet, or 12-octet address 4 specification (address4 specification) subfield, a 0-octet, 2-octet, or 4-octet QoS control specification (QoS control specification) subfield, and a 0-octet, 4-octet, or 8-octet high throughput control specification (HT control specification) subfield.

If the octet is 0, it indicates that there is no corresponding field. For example, if an octet of the frame control match specification subfield is 0, it indicates that the frame classifier type field does not carry the frame control match specification subfield.
7. The traffic classification processing element indicates how to process a plurality of traffic classification elements when the plurality of traffic classification elements exist.
8. The QoS characteristics element indicates information such as a TID to which a corresponding service flow is mapped, and a corresponding QoS parameter. Two most important QoS parameters are: a delay bound (delay bound), indicating a maximum delay allowed by a low-delay packet; and a packet delivery ratio (packet delivery ratio), indicating a required packet delivery ratio under a given delay bound requirement.

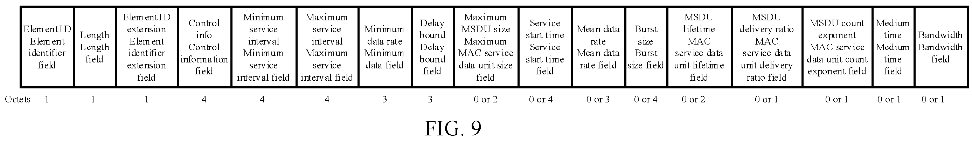

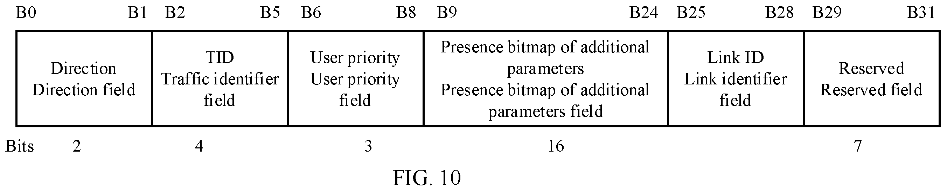

For a format of the QoS characteristics element, refer to FIG. 9. As shown in FIG. 9, the QoS characteristics element includes an element identifier (element ID) field, a length (length) field, an element identifier extension (element ID extension) field, a control information (control info) field, a minimum service interval (minimum service interval) field, a maximum service interval (maximum service interval) field, a minimum data (minimum data rate) field, a delay bound field, a maximum MAC service data unit size (maximum MSDU size) field, a service start time (service start time) field, a mean data rate (mean data rate) field, a burst size (burst size) field, a MAC service data unit lifetime (MSDU lifetime) field, a MAC service data unit delivery ratio (MSDU delivery ratio) field, a MAC service data unit count exponent (MSDU count exponent) field, a medium time (medium time) field, and a bandwidth (bandwidth) field. Details are as follows:
(1) A 1-octet element identifier field and a 1-octet element identifier extension field are used to identify the QoS characteristics element.
(2) A 1-octet length field indicates a length of the QoS characteristics element.
(3) For a format of a 4-octet control information field, refer to FIG. 10. As shown in FIG. 10, the control information field includes a direction (direction) field, a traffic identifier (TID) field, a user priority (user priority) field, a presence bitmap of additional parameters (presence bitmap of additional parameters) field, a link identifier (link ID) field, and a reserved (reserved) field. A 2-octet direction field indicates a transmission direction. For example, if the direction field is set to 00, it indicates uplink; if the direction field is set to 10, it indicates downlink; if the direction field is set to 01, it indicates a peer to peer (peer to peer, P2P) link; and 11 is a reserved value. A value of a 4-octet traffic identifier field may be 0 to 7, and 8 to 15 are reserved values. A value of a 3-octet user priority field may be 0 to 7, which is the same as the value of the traffic identifier field. The presence bitmap of additional parameters field indicates whether other parameters appear starting from the maximum MSDU length field. The link identifier field indicates a link identifier corresponding to peer to peer link transmission.
(4) A 4-octet minimum service interval field indicates a minimum interval between two consecutive service periods.
(5) A 4-octet maximum service interval field indicates a maximum interval between two consecutive service periods.
(6) A 3-octet minimum data rate field indicates a minimum data rate required by the described service flow.
(7) A 3-octet delay bound field indicates a maximum delay allowed by a data packet of the described service flow.
(8) A 0-octet or 2-octet maximum MSDU length field indicates a maximum MSDU length of the data packet of the described service flow.
(9) A 0-octet or 4-octet service start time field indicates start time of a first service period of the described service flow.
(10) A 0-octet or 3-octet mean data rate field indicates a mean data rate required by the described service flow.
(11) A 0-octet or 4-octet burst size field indicates a possible maximum peak service volume of the described service flow.
(12) A 0-octet or 2-octet MSDU lifetime field indicates a lifetime of the data packet of the described service flow.
(13) A 0-octet or 1-octet MSDU delivery ratio field indicates a required MSDU delivery ratio under a given delay bound requirement.
(14) A 0-octet or 1-octet MSDU count exponent field indicates a quantity of reference MSDUs used to calculate the MSDU delivery ratio.
(15) A 0-octet or 1-octet medium time field indicates medium time requested by the described service flow.
(16) A 0-octet or 1-octet bandwidth field indicates a size of a bandwidth requested by the described service flow.

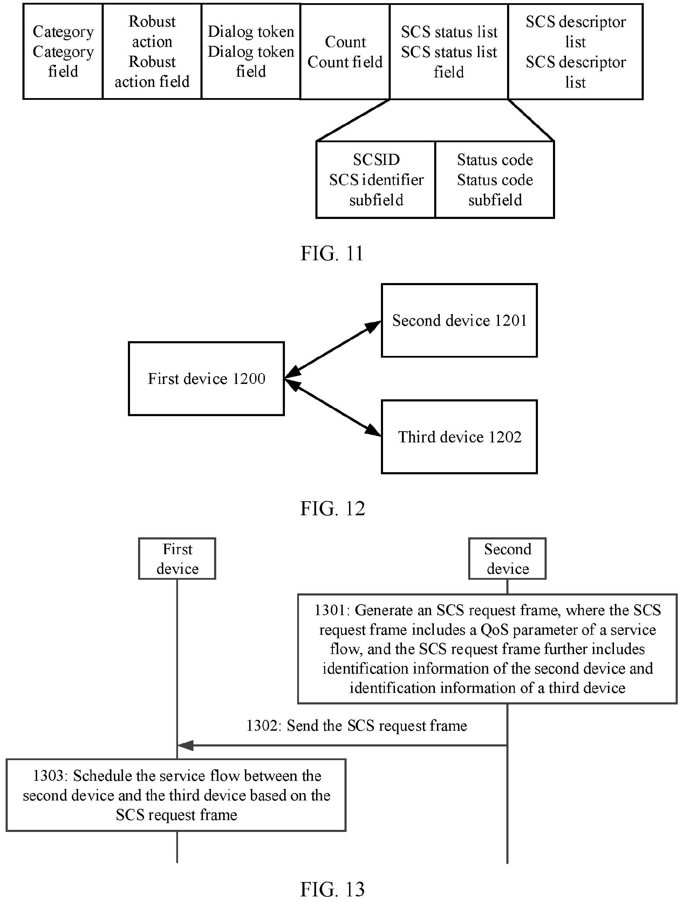

For a frame format of the SCS response frame, refer to FIG. 11. As shown in FIG. 11, the SCS response frame includes a category (category) field, a robust action (robust action) field, a dialog token (dialog token) field, a count (count) field, an SCS status list (SCS status list), and an SCS descriptor list (SCS descriptor list). The category field indicates a category to which an action frame (for example, the SCS response frame) belongs, and the robust action field indicates a frame in the category. The dialog token field in the SCS response frame needs to be consistent with a dialog token field in a corresponding SCS request frame. The count field indicates a quantity of SCSID subfields and a quantity of status code (status code) subfields in the SCS status list. The SCS status list includes one or more SCS status groups. One SCS status group is indicated by two subfields. The two subfields are: an SCSID subfield, used to indicate an identifier of the service flow; and a status code subfield, used to indicate whether a request corresponding to the SCSID is accepted. The SCS descriptor list includes one or more SCS descriptors.

The following uses FIG. 12 as an example to describe a system architecture and a service scenario in embodiments of this application. It should be noted that the system architecture and the service scenario described in this application are intended to describe the technical solutions in this application more clearly, and do not constitute a limitation on the technical solutions provided in this application. A person of ordinary skill in the art may be aware that with evolution of the system architecture and emergence of new service scenarios, the technical solutions provided in this application are also applicable to similar technical problems.

As shown in FIG. 12, a communication system includes a first device 1200, and a second device 1201 and a third device 1202 that communicate with the first device 1200. In a possible implementation, the second device 1201 may alternatively communicate with the third device 1202. In embodiments of this application, the term "communication" may also be described as "data transmission", "information transmission", or "transmission". The term "transmission" may generally refer to sending and receiving.

It should be noted that a quantity of devices in FIG. 12 is merely an example, and should not be considered as a specific limitation on this application. The following further describes in detail devices in the system architecture.

### 1. First device

The first device may be a device that supports a QoS parameter reporting mechanism. In a possible implementation, the QoS parameter reporting mechanism mentioned in this application may be, for example, reporting a QoS parameter by a non-AP MLD or a STA to an AP MLD. Further, the first device may support an SCS mechanism.

For example, the first device may be an AP MLD or the like.

A form of the first device is not limited in this application. An apparatus configured to implement a function of the first device may be the first device, or may be an apparatus that can support the first device in implementing the function, for example, a chip system. The apparatus may be installed in the first device or used in conjunction with the first device.

### 2. Second device

The second device may be a device that supports QoS parameter reporting. It may also be described as follows: The second device is a device that supports proxy QoS parameter reporting, the second device is a device that supports a QoS parameter reporting mechanism, or the second device is a device that supports a proxy QoS parameter reporting mechanism. Further, the second device may support an SCS mechanism. For example, the second device may be a non-AP MLD or the like. In this case, the non-AP MLD may also be referred to as an ultra high reliability (ultra high reliability, UHR) non-AP MLD.

A form of the second device is not limited in this application. An apparatus configured to implement a function of the second device may be the second device, or may be an apparatus that can support the second device in implementing the function, for example, a chip system. The apparatus may be installed in the second device or used in conjunction with the second device.

### 3. Third device

The third device may be a device that supports or does not support QoS parameter reporting. It may also be described as follows: The third device may be a device that supports or does not support a QoS parameter reporting mechanism. Further, the third device may support an SCS mechanism. For example, the third device may be a non-AP MLD or a STA. The STA may be a legacy STA (legacy STA), a previous extreme high throughput station (previous extreme high throughput station, Pre-EHT STA), or the like.

In a possible implementation, when the third device is a device that supports QoS parameter reporting, the third device may be a non-AP MLD. For example, the non-AP MLD may be referred to as an EHT non-AP MLD or a UHR non-AP MLD.

In a possible implementation, when the third device is a device that does not support QoS parameter reporting, the third device may be a legacy STA or a Pre-EHT STA.

A form of the third device is not limited in this application. An apparatus configured to implement a function of the third device may be the third device, or may be an apparatus that can support the third device in implementing the function, for example, a chip system. The apparatus may be installed in the third device or used in conjunction with the third device.

The following describes in detail specific solutions in embodiments of this application. It should be noted that names of messages between devices, names of parameters in the messages, or the like in the following embodiments are merely examples, and there may be other names in a specific implementation. This is not specifically limited in embodiments of this application.

FIG. 13 shows a communication method according to an embodiment of this application. The communication method includes but is not limited to the following steps.

1301: A second device generates an SCS request frame, where the SCS request frame includes a QoS parameter of a service flow, and the SCS request frame further includes identification information of the second device and identification information of a third device.

For a frame format of the SCS request frame, refer to the foregoing descriptions in FIG. 2 to FIG. 10. Details are not described herein again.

1302: The second device sends the SCS request frame to a first device.

Correspondingly, the first device receives the SCS request frame from the second device. In a possible implementation, the first device may further send an SCS response frame to the second device, where the SCS response frame indicates that the service flow is accepted. For a frame format of the SCS response frame, refer to the foregoing description in FIG. 11. Details are not described herein again.

1303: The first device schedules the service flow between the second device and the third device based on the SCS request frame.

The following describes specific implementations of step 1301 to step 1303.

The SCS request frame includes the QoS parameter of the service flow. In a possible implementation, a QoS characteristics element in the SCS request frame includes the QoS parameter of the service flow. In a possible implementation, the QoS parameter of the service flow may include a minimum service interval and/or a maximum service interval. For example, a minimum service interval field and a maximum service interval field in the QoS characteristics element respectively indicate the minimum service interval and the maximum service interval.

In a possible implementation, the QoS parameter of the service flow may include an uplink QoS parameter of the service flow or a downlink QoS parameter of the service flow. In a possible implementation, the service flow may meet the uplink QoS parameter or the downlink QoS parameter. In another possible implementation, the service flow may not meet the uplink QoS parameter or the downlink QoS parameter. In this case, it may be considered that there is a deviation between the QoS parameter met by the service flow and the uplink QoS parameter or the downlink QoS parameter. A specific magnitude of the deviation is not limited in this application.

The uplink QoS parameter of the service flow may be an uplink QoS parameter of the service flow on the second device, or may be described as a QoS parameter of the second device for uplink transmission of the service flow. For example, if a direction field in the QoS characteristics element is set to 00, it indicates uplink. In this way, it may be learned, by using the direction field, that the QoS parameter of the service flow is the uplink QoS parameter.

The downlink QoS parameter of the service flow may be a downlink QoS parameter of the service flow on the second device, or may be described as a QoS parameter of the second device for downlink transmission of the service flow. For example, if the direction field in the QoS characteristics element is set to 10, it indicates downlink. In this way, it may be learned, by using the direction field, that the QoS parameter of the service flow is the downlink QoS parameter.

That the SCS request frame includes the identification information of the second device and the identification information of the third device may be understood as: a traffic classification element in the SCS request frame includes the identification information of the second device and the identification information of the third device. In a possible implementation, the identification information of the second device and the identification information of the third device may be used by the first device to determine that both the second device and the third device are associated with the first device. Further, the identification information of the second device and the identification information of the third device may be used by the first device to determine that the foregoing service flow is the service flow between the second device and the third device.

In this application, when the first device is an AP MLD and the third device is a Pre-EHT STA, that the third device is associated with the first device may be understood as: the third device is associated with an affiliated AP of the first device.

In a possible implementation, the identification information of the second device may be a MAC address of the second device, for example, an MLD MAC address of a non-AP MLD. The identification information of the third device may be a MAC address of the third device, for example, a MAC address of a Pre-EHT STA, a MAC address of a legacy STA, or an MLD MAC address of a non-AP MLD.

In a possible implementation, source address information of the service flow may be identification information of the second device, and destination address information of the service flow may be the identification information of the third device. For example, when the second device performs uplink transmission on the service flow, the source address information of the service flow may be the identification information of the second device, and the destination address information of the service flow may be the identification information of the third device.

In another possible implementation, source address information of the service flow may be the identification information of the third device, and destination address information of the service flow may be the identification information of the second device. For example, when the second device performs downlink transmission on the service flow, the source address information of the service flow may be the identification information of the second device, and the destination address information of the service flow may be the identification information of the third device.

The source address information of the service flow may be indicated, for example, by using a source address subfield in FIG. 7, and the destination address information of the service flow may be indicated, for example, by using a destination address subfield in FIG. 7.

In a possible implementation, the SCS request frame may further include indication information, or the SCS request frame does not include the indication information. The indication information indicates the first device to schedule the service flow between the second device and the third device based on the QoS parameter of the service flow. Details are as follows:
1. The QoS parameter of the service flow includes an uplink QoS parameter of the service flow, and the indication information indicates the first device to schedule uplink transmission of the service flow on the second device and downlink transmission of the service flow on the third device based on the uplink QoS parameter of the service flow.

In a possible implementation, a deviation between the uplink QoS parameter of the service flow (that is, the uplink QoS parameter of the service flow on the second device) and a downlink QoS parameter of the service flow on the third device is within a specific range. For example, if a deviation between a minimum service interval of the service flow on the second device and a minimum service interval of the service flow on the third device is within a first interval range, and/or an interval deviation between a maximum service interval of the service flow on the second device and a maximum service interval of the service flow on the third device is within a second interval range, the second device may consider that the uplink QoS parameter of the service flow on the second device is the same as the downlink QoS parameter of the service flow on the third device. In this case, the uplink QoS parameter of the service flow may be further understood as an end-to-end QoS parameter, for example, including the uplink QoS parameter of the service flow on the second device and the downlink QoS parameter of the service flow on the third device. In other words, the second device does not need to separately report the uplink QoS parameter of the service flow on the second device and the downlink QoS parameter of the service flow on the third device.

In a possible implementation, the second device may learn of the downlink QoS parameter of the service flow on the third device by using an application layer and/or a network layer. A specific process is not limited herein.

The first interval range and the second interval range may be the same or different. It should be noted that an interval range mentioned in this application may be predefined or preconfigured, or indicated by the first device to the second device or indicated by the third device to the second device, or the like. Optionally, the interval range may include an interval determined by a maximum interval and a minimum interval, and the interval range may further include a boundary point or may not include a boundary point, for example, the maximum interval and/or the minimum interval.

2. The QoS parameter of the service flow includes a downlink QoS parameter of the service flow, and the indication information indicates the first device to schedule downlink transmission of the service flow on the second device and uplink transmission of the service flow on the third device based on the downlink QoS parameter of the service flow.

In a possible implementation, a deviation between the downlink QoS parameter of the service flow (that is, the downlink QoS parameter of the service flow on the second device) and an uplink QoS parameter of the service flow on the third device is within a specific range. For example, if a deviation between a minimum service interval of the service flow on the second device and a minimum service interval of the service flow on the third device is within a third interval range, and/or an interval deviation between a maximum service interval of the service flow on the second device and a maximum service interval of the service flow on the third device is within a fourth interval range, the second device may consider that the downlink QoS parameter of the service flow on the second device is the same as the uplink QoS parameter of the service flow on the third device. In this case, the downlink QoS parameter of the service flow may be further understood as an end-to-end QoS parameter, for example, including the downlink QoS parameter of the service flow on the second device and the uplink QoS parameter of the service flow on the third device. In other words, the second device does not need to separately report the downlink QoS parameter of the service flow on the second device and the uplink QoS parameter of the service flow on the third device.

In a possible implementation, the second device may learn of the uplink QoS parameter of the service flow on the third device by using an application layer and/or a network layer. A specific process is not limited herein.

The third interval range and the fourth interval range may be the same or different.

It should be noted that, in addition to the solution "the second device considers that the uplink QoS parameter of the service flow on the second device is the same as the downlink QoS parameter of the service flow on the third device" in the foregoing manner 1 and the solution "the second device considers that the downlink QoS parameter of the service flow on the second device is the same as the uplink QoS parameter of the service flow on the third device" in the foregoing manner 2, the second device may learn, in another manner, that the uplink QoS parameter of the service flow on the second device is the same as the downlink QoS parameter of the service flow on the third device, and/or that the downlink QoS parameter of the service flow on the second device is the same as the uplink QoS parameter of the service flow on the third device. For example, if a time deviation between service start time of the second device and service start time of the third device is within a specific time range, the second device may also consider that the uplink QoS parameter of the service flow on the second device is the same as the downlink QoS parameter of the service flow on the third device, and/or that the downlink QoS parameter of the service flow on the second device is the same as the uplink QoS parameter of the service flow on the third device.

In a possible implementation, the indication information may be carried in a control information field in the QoS characteristics element. The indication information may be a newly added bit, a newly added field, a reserved field, or the like in the control information field. This is not limited herein. For example, the indication information may be at least one bit, and a specific quantity of bits is not limited. For example, the indication information may be 1 bit, a value of the indication information is 0 or 1, and the indication information indicates the first device to schedule the service flow between the second device and the third device based on the QoS parameter of the service flow.

In a possible implementation, the indication information may be referred to as proxy QoS enable (proxy QoS enable) in this application. In this case, the indication information indicates the first device to schedule the service flow between the second device and the third device based on the QoS parameter of the service flow, or may be described as enabling a QoS proxy or the like. For example, when the second device learns that both the second device and the third device are associated with the first device, the QoS proxy may be enabled. Details of a specific process in which the second device learns that the third device is also associated with the first device are not described herein again.

When the SCS request frame includes the indication information, step 1303 may include: scheduling, by the first device, the service flow between the second device and the third device based on the indication information and the QoS parameter of the service flow. For example, the QoS parameter of the service flow includes an uplink QoS parameter of the service flow, and the first device may schedule uplink transmission of the service flow on the second device and downlink transmission of the service flow on the third device based on the uplink QoS parameter of the service flow. For example, the QoS parameter of the service flow includes a downlink QoS parameter of the service flow, and the first device may schedule downlink transmission of the service flow on the second device and uplink transmission of the service flow on the third device based on the downlink QoS parameter of the service flow. This explicit indication manner is more flexible.

When the SCS request frame does not include the indication information, step 1303 may include: scheduling, by the first device, the service flow between the second device and the third device based on the QoS parameter of the service flow. For example, when the first device learns, by using the identification information of the second device and the identification information of the third device, that both the second device and the third device are associated with the first device, the first device may schedule the service flow between the second device and the third device based on the QoS parameter of the service flow. For example, the QoS parameter of the service flow includes an uplink QoS parameter of the service flow, and the first device may schedule uplink transmission of the service flow on the second device and downlink transmission of the service flow on the third device based on the uplink QoS parameter of the service flow. For example, the QoS parameter of the service flow includes a downlink QoS parameter of the service flow, and the first device may schedule downlink transmission of the service flow on the second device and uplink transmission of the service flow on the third device based on the downlink QoS parameter of the service flow. In this implicit indication manner, signaling overheads can be reduced.

It can be learned that in the foregoing embodiment, the first device may schedule the service flow between the second device and the third device based on the SCS request frame from the second device, so that the first device does not need to receive the SCS request frame from the second device and the third device a plurality of times, to separately schedule transmission of the service flow on the second device and transmission of the service flow on the third device based on a plurality of SCS request frames. For example, the first device first receives an SCS request frame (the SCS request frame is used to schedule uplink transmission of the service flow on the second device) from the second device, and then receives another SCS request frame (the SCS request frame is used to schedule downlink transmission of the service flow on the third device) from the third device. Then, the first device receives an SCS request frame (the SCS request frame is used to schedule uplink transmission of the service flow on the second device) from the second device, and finally receives another SCS request frame (the SCS request frame is used to schedule downlink transmission of the service flow on the third device) from the third device. In this way, signaling overheads can be reduced. In addition, end-to-end QoS is ensured, and user experience is improved.

It may be understood that, in the embodiment shown in FIG. 13, when the QoS parameter of the service flow included in the SCS request frame is the uplink QoS parameter, the SCS request frame may still include the traffic classification element. This can simplify signaling, to help the first device ensure that a service is mapped to a corresponding TID, thereby ensuring consistency of QoS management policies of all stations within a range of a BSS, and better managing and scheduling service transmission of the entire BSS.

In a possible implementation, an address field corresponding to a frame classifier type field of ADD of an MPDU in a multi-link scenario may be a corresponding MLD address. For example, the source address subfield and the destination address subfield in FIG. 7 may be MLD MAC addresses of two non-AP MLDs respectively.

ADD may be indicated by using the request type field in FIG. 3.

In a possible implementation, when a value of the frame classifier type field in the multi-link scenario is 6, an address field corresponding to the frame classifier type field may be a corresponding MLD address. For example, at least one of the address 1 match specification subfield, the address 2 match specification subfield, the address 3 match specification subfield, and the like in FIG. 8 may be an MLD address. Further, in this case, a frame classifier may be deployed on low MAC.

It may be understood that, to implement the foregoing functions, the device includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device or the second device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

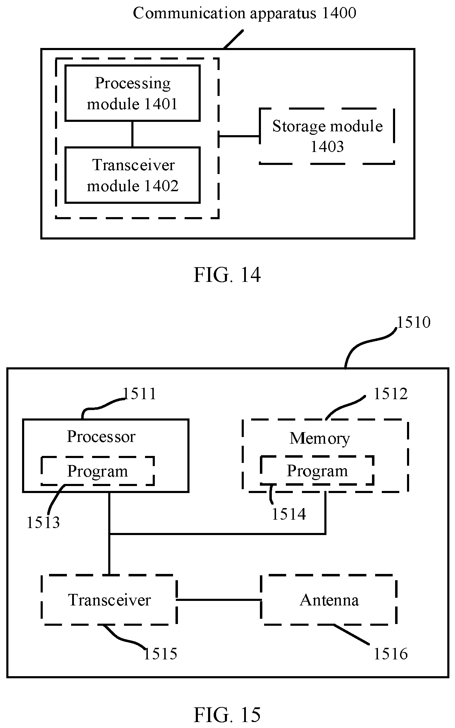

FIG. 14 is a diagram of a structure of a communication apparatus according to an embodiment of this application. The communication apparatus 1400 may be applied to the method shown in any one of the foregoing embodiments of FIG. 13. As shown in FIG. 14, the communication apparatus 1400 includes a processing module 1401 and a transceiver module 1402. The processing module 1401 may be one or more processors, and the transceiver module 1402 may be a transceiver or a communication interface. The communication apparatus may be configured to implement a function of the first device or the second device in any one of the foregoing method embodiments, or configured to implement a function of the network element in any one of the foregoing method embodiments. The network element or network function may be a network element in a hardware device, a software function running on dedicated hardware, or an instantiated virtualization function on a platform (for example, a cloud platform). Optionally, the communication apparatus 1400 may further include a storage module 1403, configured to store program code and data of the communication apparatus 1400.

In an example, the communication apparatus is used as the first device or a chip used in the first device, and performs steps performed by the first device in the foregoing method embodiments. The transceiver module 1402 is configured to specifically perform a sending and/or receiving action performed by the first device in any one of embodiments in FIG. 13, for example, support the first device in performing another process of the technology described in this specification. The processing module 1401 may be configured to support the communication apparatus 1400 in performing a processing action in the foregoing method embodiments, for example, support the first device in performing another process of the technology described in this specification.

For example, the transceiver module 1402 is configured to receive an SCS request frame from the second device, where the SCS request frame includes a QoS parameter of a service flow, and the SCS request frame further includes identification information of the second device and identification information of a third device. The processing module 1401 is configured to schedule the service flow between the second device and the third device based on the SCS request frame.

In a possible implementation, the SCS request frame further includes indication information, and when scheduling the service flow between the second device and the third device based on the SCS request frame, the processing module 1401 is configured to schedule the service flow between the second device and the third device based on the indication information and the QoS parameter of the service flow.

In a possible implementation, when scheduling the service flow between the second device and the third device based on the SCS request frame, the processing module 1401 is configured to: when the QoS parameter of the service flow includes an uplink QoS parameter of the service flow, schedule, based on the SCS request frame, uplink transmission of the service flow on the second device and downlink transmission of the service flow on the third device; and/or when the QoS parameter of the service flow includes a downlink QoS parameter of the service flow, schedule, based on the SCS request frame, downlink transmission of the service flow on the second device and uplink transmission of the service flow on the third device.

In a possible implementation, the processing module 1401 is further configured to determine, based on the identification information of the second device and the identification information of the third device, that both the second device and the third device are associated with the first device.

In a possible implementation, the transceiver module 1402 is further configured to send an SCS response frame to the second device, where the SCS response frame indicates that the service flow is accepted.

In an example, the communication apparatus is used as the second device or a chip used in the second device, and performs steps performed by the second device in the foregoing method embodiments. The transceiver module 1402 is configured to specifically perform a sending and/or receiving action performed by the second device in any one of embodiments in FIG. 13, for example, support the second device in performing another process of the technology described in this specification. The processing module 1401 may be configured to support the communication apparatus 1400 in performing a processing action in the foregoing method embodiments, for example, support the second device in performing another process of the technology described in this specification.

For example, the processing module 1401 is configured to generate the SCS request frame, where the SCS request frame includes the QoS parameter of the service flow, and the SCS request frame further includes the identification information of the second device and the identification information of the third device. The transceiver module 1402 is configured to send the SCS request frame to the first device, where the SCS request frame is used by the first device to schedule the service flow between the second device and the third device.

In a possible implementation, the transceiver module 1402 is further configured to receive an SCS response frame from the first device, where the SCS response frame indicates that the service flow is accepted.

In a possible implementation, when the first device or the second device is a chip, the transceiver module 1402 may be a communication interface, a pin, a circuit, or the like. The communication interface may be configured to input to-be-processed data to a processor, and may output a processing result of the processor to the outside. During specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 1401 may be a processor. The processor may execute computer-executable instructions stored in the storage module, so that the chip performs the method in any one of embodiments of FIG. 13. Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a register operand, intermediate operation results, and the like that are temporarily stored during instruction execution. During specific implementation, a hardware architecture of the processor may be an ASIC architecture, a microprocessor without interlocked piped stages (microprocessor without interlocked piped stages architecture, MIPS) architecture, an advanced reduced instruction set computer machines (advanced RISC machines, ARM) architecture, a second processor (network processor, NP) architecture, or the like. The processor may be a single-core or multi-core processor. The storage module may be a storage module inside the chip, for example, a register or a cache. Alternatively, the storage module may be a storage module, for example, a ROM or another type of static storage device that can store static information and instructions, or a RAM, located outside the chip.

It should be noted that functions respectively corresponding to the processor and the interface may be implemented by using a hardware design, or may be implemented by using a software design, or may be implemented by using a combination of software and hardware. This is not limited herein.

FIG. 15 is a diagram of a structure of another communication apparatus according to an embodiment of this application. It may be understood that the communication apparatus 1510 includes means in necessary forms, such as modules, units, elements, circuits, or interfaces, which are appropriately configured together to implement the solution. The communication apparatus 1510 may be the foregoing first device or second device, or may be a component (for example, a chip) in these devices, to implement the method described in the foregoing method embodiments. The communication apparatus 1510 includes one or more processors 1511. The processor 1511 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the first device, the second device, or a chip), execute a software program, and process data of the software program.

Optionally, in a design, the processor 1511 may include a program 1513 (which may also be sometimes referred to as code or instructions). The program 1513 may be run on the processor 1511, to enable the communication apparatus 1510 to perform the method described in the foregoing embodiment. In another possible design, the communication apparatus 1510 includes a circuit (not shown in FIG. 15). The circuit is configured to implement functions of the first device and the second device in the foregoing embodiments. Optionally, the communication apparatus 1510 may include one or more memories 1512, and a program 1514 (which may also be sometimes referred to as code or instructions) is stored in the memory 1512. The program 1514 may be run on the processor 1511, to enable the communication apparatus 1510 to perform the method described in the foregoing method embodiments.

Optionally, the processor 1511 and/or the memory 1512 may further store data. The processor and the memory may be separately disposed, or may be integrated together.

Optionally, the communication apparatus 1510 may further include a transceiver 1515 and/or an antenna 1516. The processor 1511 may also be referred to as a processing unit sometimes, and control the communication apparatus (for example, the first device or the second device). The transceiver 1515 may also be referred to as a transceiver unit, a transceiver machine, a transceiver circuit, a transceiver, or the like sometimes, and is configured to implement receiving and sending functions of the communication apparatus through the antenna 1516.

An embodiment of this application further provides a communication apparatus. The communication apparatus includes at least one processor. The at least one processor is configured to perform the method according to any one of embodiments in FIG. 13.

An embodiment of this application further provides a computer-readable storage medium. The computer-readable storage medium stores computer instructions. When the computer instructions are executed, a computer is enabled to perform the method according to any one of embodiments in FIG. 13.

An embodiment of this application further provides a computer program product. The computer program product includes computer program code. When the computer program code is run on a computer, the computer is enabled to perform the method according to any one of embodiments in FIG. 13.

An embodiment of this application further provides a chip. The chip includes at least one processor and an interface. The processor is configured to: read and execute instructions stored in a memory. When the instructions are run, the chip is enabled to perform the method according to any one of embodiments in FIG. 13.

The foregoing units described as separate parts may or may not be physically separate, and parts displayed as units may or may not be physical units, may be located in one position, or may be distributed on a plurality of network units. Some or a part of the units may be selected based on actual requirements to achieve the objectives of the solutions of embodiments in this application. In addition, various network element units in embodiments of this application may be integrated into one processing unit, or each of the units may exist independently physically, or two or more units may be integrated into one unit. The integrated unit may be implemented in a form of hardware, or may be implemented in a form of software network element unit.

When the integrated unit is implemented in the form of software network element unit and sold or used as an independent product, the integrated unit may be stored in a computer-readable storage medium. Based on such an understanding, a part essentially contributing to the technical solutions of this application, or all or some of the technical solutions may be embodied in a form of a software product. The computer software product is stored in a storage medium, and includes several instructions for instructing a computer device (which may be a personal computer, a first device, a cloud server, a second device, or the like) to perform all or some of the steps of the methods described in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc.

## Claims

1. A communication method, comprising:
receiving, by a first device, a stream classification service SCS request frame from a second device, wherein the SCS request frame comprises a quality of service QoS parameter of a service flow, and the SCS request frame further comprises identification information of the second device and identification information of a third device; and
scheduling, by the first device, the service flow between the second device and the third device based on the SCS request frame.

2. The method according to claim 1, wherein the SCS request frame further comprises indication information, and the scheduling, by the first device, the service flow between the second device and the third device based on the SCS request frame comprises:
scheduling, by the first device, the service flow between the second device and the third device based on the indication information and the QoS parameter of the service flow.

3. The method according to claim 1 or 2, wherein the scheduling, by the first device, the service flow between the second device and the third device based on the SCS request frame comprises:
when the QoS parameter of the service flow comprises an uplink QoS parameter of the service flow, scheduling, by the first device, uplink transmission of the service flow on the second device and downlink transmission of the service flow on the third device based on the SCS request frame; and/or
when the QoS parameter of the service flow comprises a downlink QoS parameter of the service flow, scheduling, by the first device, downlink transmission of the service flow on the second device and uplink transmission of the service flow on the third device based on the SCS request frame.

4. The method according to any one of claims 1 to 3, wherein the method further comprises:
determining, by the first device based on the identification information of the second device and the identification information of the third device, that both the second device and the third device are associated with the first device.

5. The method according to any one of claims 1 to 4, wherein the first device is an access point multi-link device, the second device is a non-access point multi-link device, and the third device is a non-access point multi-link device or a device that does not support QoS parameter reporting.

6. The method according to any one of claims 1 to 5, wherein
the identification information of the second device is a medium access control MAC address of the second device, and the identification information of the third device is a MAC address of the third device; and
source address information of the service flow is the identification information of the second device, and destination address information of the service flow is the identification information of the third device; or
source address information of the service flow is the identification information of the third device, and destination address information of the service flow is the identification information of the second device.

7. The method according to claim 2, wherein the indication information is carried in a QoS characteristics element of the SCS request frame.

8. The method according to any one of claims 1 to 7, wherein the identification information of the second device and the identification information of the third device are carried in a traffic classification element of the SCS request frame.

9. The method according to any one of claims 1 to 8, wherein the QoS parameter of the service flow comprises a minimum service interval and/or a maximum service interval.

10. The method according to any one of claims 1 to 9, wherein the method further comprises:
sending, by the first device, an SCS response frame to the second device, wherein the SCS response frame indicates that the service flow is accepted.

11. A communication method, comprising:
generating, by a second device, a stream classification service SCS request frame, wherein the SCS request frame comprises a quality of service QoS parameter of a service flow, and the SCS request frame further comprises identification information of the second device and identification information of a third device; and
sending, by the second device, the SCS request frame to a first device, wherein the SCS request frame is used by the first device to schedule the service flow between the second device and the third device.

12. The method according to claim 11, wherein the SCS request frame further comprises indication information, and the indication information and the QoS parameter of the service flow are used by the first device to schedule the service flow between the second device and the third device.

13. The method according to claim 11 or 12, wherein
the QoS parameter of the service flow comprises an uplink QoS parameter of the service flow, and the QoS parameter of the service flow is used by the first device to schedule uplink transmission of the service flow on the second device and downlink transmission of the service flow on the third device; and/or
the QoS parameter of the service flow comprises a downlink QoS parameter of the service flow, and the QoS parameter of the service flow is used by the first device to schedule downlink transmission of the service flow on the second device and uplink transmission of the service flow on the third device.

14. The method according to any one of claims 11 to 13, wherein the first device is an access point multi-link device, the second device is a non-access point multi-link device, and the third device is a non-access point multi-link device or a device that does not support QoS parameter reporting.

15. The method according to any one of claims 11 to 14, wherein
the identification information of the second device is a medium access control MAC address of the second device, and the identification information of the third device is a MAC address of the third device; and
source address information of the service flow is the identification information of the second device, and destination address information of the service flow is the identification information of the third device; or
source address information of the service flow is the identification information of the third device, and destination address information of the service flow is the identification information of the second device.

16. The method according to claim 12, wherein the indication information is carried in a QoS characteristics element of the SCS request frame.

17. The method according to any one of claims 11 to 16, wherein the identification information of the second device and the identification information of the third device are carried in a traffic classification element of the SCS request frame.

18. The method according to any one of claims 11 to 17, wherein the QoS parameter of the service flow comprises a minimum service interval and/or a maximum service interval.

19. The method according to any one of claims 11 to 18, wherein the method further comprises:
receiving, by the second device, an SCS response frame from the first device, wherein the SCS response frame indicates that the service flow is accepted.

20. A communication apparatus, comprising a unit or a module configured to implement the method according to any one of claims 1 to 19.

21. A communication apparatus, wherein the communication apparatus comprises at least one processor, and the at least one processor is configured to perform the method according to any one of claims 1 to 19.

22. A computer-readable storage medium, wherein the computer-readable storage medium stores computer instructions, and when the computer instructions are executed, the computer is enabled to perform the method according to any one of claims 1 to 19.

23. A computer program product, wherein the computer program product comprises computer program code, and when the computer program code is run on a computer, the computer is enabled to perform the method according to any one of claims 1 to 19.

24. A chip, wherein the chip comprises at least one processor and an interface, the processor is configured to read and execute instructions stored in a memory, and when the instructions are run, the chip is enabled to perform the method according to any one of claims 1 to 19.
